# EUROPÄISCHE PATENTSCHRIFT

(11) **EP 3 328 676 B1**
(45) Veröffentlichungstag und Bekanntmachung des Hinweises auf die Patenterteilung: **15.04.2020**
(21) Anmeldenummer: 16736872.9
(22) Anmeldetag: 08.07.2016
(51) Int. Cl.: B60K 35/00, G01C 21/36, B60W 50/00

(54) **VERFAHREN UND SYSTEM ZUM DARSTELLEN VON FAHRMODI EINES FAHRZEUGS**
METHOD AND SYSTEM FOR DISPLAYING DRIVING MODES OF A VEHICLE
PROCÉDÉ ET SYSTÈME DE REPRÉSENTATION DES MODES DE CONDUITE D'UN VÉHICULE

(30) Priorität: 31.07.2015 DE 102015214685
(43) Veröffentlichungstag der Anmeldung: 06.06.2018
(73) Patentinhaber: Volkswagen Aktiengesellschaft, 38440 Wolfsburg (DE)
(72) Erfinder: PETERMANN-STOCK, Ina, 38448 Wolfsburg (DE); OTHERSEN, Ina, 38440 Wolfsburg (DE); ROGGE-SOLTI, Agata, 80636 München (DE)
(86) Internationale Anmeldenummer: PCT/EP2016/066292
(87) Internationale Veröffentlichungsnummer: WO 2017/021099

(56) Entgegenhaltungen:
- EP-A1- 2 159 098
- DE-A1-102009 060 391
- DE-A1-102010 047 778

## Beschreibung

Die Erfindung betrifft ein Verfahren und ein System zum Darstellen von Fahrmodi eines Fahrzeugs, wobei das Fahrzeug in zumindest zwei unterschiedlichen Fahrmodi betreibbar ist.

In Folge der Entwicklung des automatischen Fahrens in einem Fahrzeug sieht sich der Fahrer mit unterschiedlichen Automationsstufen im Fahrzeug konfrontiert. Die Automationsstufen umfassen dabei das manuelle Fahren, bei dem der Fahrer die gesamte Fahrzeugführung selbst übernimmt, teilautomatisches Fahren, bei dem der Fahrer teilweise vom Fahrzeug unterstützt wird, bei dem das Fahrzeug zwar die Fahrzeugführung übernimmt, der Fahrer aber nicht von einer Überwachung der Fahrzeugführung entbunden ist, und hochautomatisches Fahren, bei dem der Fahrer sämtliche Fahrverantwortung an das Fahrzeug abgibt. Der hochautomatische Fahrmodus umfasst dabei auch einen vollautomatischen Fahrmodus. Es kann von der befahrenen Strecke abhängen, welche Automationsstufe zur Verfügung steht. Sind mehrere Automationsstufen möglich, kann der Fahrer selbst aussuchen, welche Automationsstufe er zum Führen des Fahrzeugs verwendet.

Die DE 10 2013 208 206 A1 beschreibt eine Vorrichtung zum Hinweisen auf zukünftige automatisch durchgeführte Lenkeingriffe in einem Fahrzeug. Dabei werden in Abhängigkeit von Angaben zu zukünftigen Lenkeingriffen mehrere im Lenkradkranz nebeneinander positionierte Lichtelemente aktiviert.

Ferner beschreibt die DE 10 2012 002 306 A1 eine Fahrerassistenzeinrichtung, welche dazu ausgelegt ist, einen Kraftwagen während einer Fahrt selbstständig zu führen. Hierzu ist zwischen mehreren Assistenzmodi umschaltbar. Die Assistenzmodi umfassen dabei das Spektrum von der manuellen Fahrt über die Teil- und Hochautomation bis hin zur vollständigen Autonomie des Fahrzeugs. Für jeden Assistenzmodus wird dabei ein anderes Bedienelement verwendet.

Aus der DE 10 2010 047778 A1 ist ein Bediensystem und ein Verfahren zum Steuern einer Mehrzahl von Fahrerassistenzsystemen in einem Fahrzeug bekannt. Dabei werden von einer Steuereinrichtung Aktivitätsinformationen für die Fahrerassistenzsysteme erfasst und die den einzelnen Fahrerassistenzsystemen zugeordneten Aktivitätsinformationen in einem Assistenzauswahlsatz zusammengefasst. Die Aktivitätsinformationen geben dabei an, ob ein zugeordnetes Fahrerassistenzsystem in einem Assistenzbetriebszustand zu aktivieren oder zu deaktivieren ist. Die einzelnen Assistenzauswahlsätze werden auf einer Anzeigeeinrichtung dargestellt. Die Darstellung erfolgt in Form von virtuellen Karteikarten mit einem die Kennzeichnung aufweisenden Reiter. Den Fahrerassistenzsystemen ist dabei jeweils ein Aktivierungsfeld zugeordnet, in dem die jeweilige Aktivierungsinformation visualisiert ist.

Aus der DE 10 2009 060391 A1 ist ein Verfahren und eine Vorrichtung zur Kennzeichnung der Kontrollverantwortung für automatisierte Fahrvorgänge eines Fahrerassistenzsystems bekannt. Dabei kann die Kontrollverantwortung zwischen Fahrer und Fahrerassistenzsystem als Funktion der Fahrsituation verteilt werden. Die Kontrollverantwortung wird für den automatisierten Fahrvorgang durch unterschiedliche farbliche Kennzeichnungen angezeigt.

Nachteilig ist dabei jedoch, dass für den Fahrer nicht eindeutig erkennbar ist, in welchem Modus er welche Aufgaben selbst zu übernehmen hat.

Es ist daher die Aufgabe der vorliegenden Erfindung, ein Verfahren und ein System bereitzustellen, bei welchen der Fahrer intuitiv und einfach die von ihm zu übernehmenden Aufgaben erkennen kann.

Erfindungsgemäß wird diese Aufgabe durch ein Verfahren der oben genannten Art mit den Merkmalen des Anspruchs 1 und durch ein System der oben genannten Art mit den Merkmalen des Anspruchs 12 gelöst. Vorteilhafte Ausgestaltungen und Weiterbildungen ergeben sich aus den abhängigen Ansprüchen.

Bei dem erfindungsgemäßen Verfahren wird ermittelt, ob das Fahrzeug in einem ersten oder einem zweiten Fahrmodus betrieben wird, wobei in dem ersten Fahrmodus ein zweiter Akteur eine erste Aktion ausführt und in dem zweiten Fahrmodus ein erster Akteur die erste Aktion ausführt. Weiterhin wird auf einer Anzeigefläche ein erstes grafisches Element erzeugt, welches den ersten Akteur repräsentiert, und es wird ein zweites grafisches Element erzeugt, welches den zweiten Akteur repräsentiert. In Abhängigkeit davon, ob sich das Fahrzeug in dem ersten oder dem zweiten Fahrmodus befindet, wird ein erstes grafisches Aktionselement, welches die erste Aktion repräsentiert, bei dem ersten und/oder zweiten grafischen Element erzeugt. Dabei kann durch die Darstellungsweise und dadurch, ob überhaupt ein Aktionselement bei einem der beiden grafischen Elemente angezeigt wird, auf einfache Weise dargestellt werden, welcher Akteur die Aktion momentan ausführt.

Erfindungsgemäß ist der erste Akteur ein Teilsystem zum automatischen Steuern des Fahrzeugs sein und/oder der zweite Akteur der Fahrer des Fahrzeugs. Beim ersten Fahrmodus führt dann der Fahrer das Fahrzeug manuell selbst, während das Fahrzeug im hochautomatischen Fahrmodus von einem System des Fahrzeugs geführt und überwacht wird. Das Teilsystem zum automatischen Steuern umfasst dabei insbesondere alle Fahrerassistenzsysteme, die einen Bezug zum automatisierten Fahren aufweisen. Diese können beispielsweise ein Spurhalteassistent, ein automatischer Abstandsregler, ein Geschwindigkeitsregler usw. umfassen. Im Folgenden ist, wenn das Fahrzeug als Akteur bezeichnet wird, gemeint, dass das Teilsystem zum automatischen Steuern die Aktionen ausführt.

Im Sinne der Erfindung wird unter "bei dem ersten und/oder zweiten grafischen Element" verstanden, dass das Aktionselement visuell einem der beiden grafischen Elementen eindeutig zugeordnet werden kann. Werden das erste und das zweite grafische Element beispielsweise untereinander angezeigt, so wird das Aktionselement neben dem grafischen Element angezeigt, das den Akteur repräsentiert, der die Aktion ausführt. Werden das erste und das zweite grafische Element beispielsweise nebeneinander angezeigt, so wird das Aktionselement unter dem grafischen Element angezeigt, das den Akteur repräsentiert, der die Aktion ausführt. Durch das erfindungsgemäße Verfahren wird vorteilhafterweise eine große Flexibilität zur Darstellung der verschiedenen Fahrmodi ermöglicht. Dadurch, dass verschiedene Akteure angezeigt werden, kann eine ausgeführte Aktion flexibel einem Akteur zugeordnet und bei diesem angezeigt werden. Dadurch kann der Fahrer auf intuitive Weise erfassen, welche Aufgaben ihm im momentanen Fahrmodus zukommen, und welche beispielsweise das Fahrzeug selbst übernimmt.

In einer Ausgestaltung des erfindungsgemäßen Verfahrens wird von dem ersten oder dem zweiten Akteur zumindest eine zweite Aktion ausgeführt, wobei in Abhängigkeit von der Ermittlung, ob sich das Fahrzeug in dem ersten oder dem zweiten Fahrmodus befindet, ein zweites grafisches Aktionselement, welches die zweite Aktion repräsentiert, bei dem ersten und/oder zweiten grafischen Element erzeugt wird. Diese Ausgestaltung ermöglicht es, dass auch bei mehr als einer möglichen Aktion, die von jedem Akteur ausgeführt werden kann, die Anzeige nach wie vor intuitiv und einfach ausgestaltet ist. Es wird eine Visualisierung aller möglichen Konstellationen zwischen den Akteuren und den Aktionen ermöglicht. Es ist daher nicht mehr notwendig, für jede einzelne Konstellation ein separates Symbol zu verwenden, dessen Bedeutung dem Fahrer möglicherweise nicht klar ist. Vielmehr wird durch eine begrenzte Anzahl an grafischen Elementen, wobei der Fahrer jedes einzelne grafische Element einfach erkennen kann, eine Vielzahl der möglichen Konstellationen abgedeckt.

Insbesondere umfasst die erste Aktion ein Überwachen des Fahrzeugs und/oder die zweite Aktion umfasst eine Fahrzeugführung des Fahrzeugs. Diese möglichen Aktionen bilden allgemeine Untergruppen von Aktionen, die beim Führen eines Fahrzeugs auszuführen sind. Die Fahrzeugführung kann in weitere Unteraktionen, wie beispielsweise Lenken, Bremsen und Gas geben, unterteilt werden. Das Überwachen wiederum kann in weitere Unteraktionen, wie beispielsweise Verkehrsüberwachung und Überwachung der Fahrzeugführung, insbesondere Überwachung der gefahrenen Geschwindigkeit, unterteilt werden.

Insbesondere führt in dem ersten Fahrmodus der zweite Akteur die erste und die zweite Aktion aus. In dem zweiten Fahrmodus führt der erste Akteur die erste und die zweite Aktion aus. In einem dritten Fahrmodus führt der erste Akteur die zweite Aktion und der zweite Akteur die erste Aktion aus. Die Fahrmodi sind also durch die unterschiedlichen Konstellationen der Akteure mit den Aktionen gekennzeichnet.

Bevorzugt wird in dem ersten Fahrmodus das Fahrzeug manuell geführt, in dem zweiten Fahrmodus das Fahrzeug hochautomatisch geführt und in dem dritten Fahrmodus das Fahrzeug teilautomatisch geführt. Die unterschiedlichen Fahrmodi bezeichnen daher die unterschiedlichen Automationsstufen, die in einem Fahrzeug möglich sind. Durch die Anzeige der unterschiedlichen Aktionselementen bei den grafischen Elementen können diese vorteilhafterweise einfach dargestellt werden.

In einer anderen Ausgestaltung wird ermittelt in welchem Fahrmodus sich das Fahrzeug befindet. Wenn ermittelt wird, dass sich das Fahrzeug in dem ersten Fahrmodus befindet, werden das erste und das zweite grafische Aktionselement bei dem zweiten grafischen Element erzeugt. Wenn ermittelt wird, dass sich das Fahrzeug in dem zweiten Fahrmodus befindet, werden das erste und das zweite grafische Aktionselement bei dem ersten grafischen Element erzeugt. Wenn ermittelt wird, dass sich das Fahrzeug in dem dritten Fahrmodus befindet, wird das erste Aktionselement bei dem zweiten grafischen Element und das zweite Aktionselement bei dem ersten grafischen Element erzeugt. Dadurch wird das Anzeigekonzept für die Automationsstufen vorteilhafterweise hoch flexibel ausgestaltet.

In einer weiteren Ausgestaltung wird ermittelt, in welchem Fahrmodus sich das Fahrzeug befindet. Unabhängig davon, in welchem Fahrmodus sich das Fahrzeug befindet, werden das erste und das zweite grafische Aktionselement bei dem ersten und bei dem zweiten grafischen Element erzeugt. Wenn ermittelt wird, dass sich das Fahrzeug in dem ersten Fahrmodus befindet, werden das erste und das zweite Aktionselement bei dem zweiten grafischen Element hervorgehoben dargestellt. Wenn ermittelt wird, dass sich das Fahrzeug in dem zweiten Fahrmodus befindet, werden das erste und das zweite Aktionselement bei dem ersten grafischen Element hervorgehoben dargestellt. Wenn ermittelt wird, dass sich das Fahrzeug in dem dritten Fahrmodus befindet, werden das erste Aktionselement bei dem zweiten grafischen Element und das zweite Aktionselement bei dem ersten grafischen Element hervorgehoben dargestellt. In dieser Ausgestaltung wird dem Fahrer vorteilhafterweise von Anfang an dargestellt, dass beide Akteure beide Aktionen ausführen können. Dabei können die Aktionselemente dadurch hervorgehoben dargestellt werden, dass sie im Vergleich zu den nicht hervorgehoben dargestellten Aktionselementen vergrößert dargestellt werden. Alternativ können die nicht hervorgehoben dargestellten Aktionselemente ausgegraut dargestellt werden, so dass die anderen Aktionselemente hervorgehoben erscheinen. Zudem ist auch eine Farbcodierung der Aktionselemente denkbar, bei der hervorgehoben dargestellten Aktionselemente in einer bestimmten Farbe dargestellt werden. Ferner können die Aktionselemente auch in Abhängigkeit davon, bei welchem Akteur sie erzeugt werden, eingefärbt werden.

Die Aktionselemente bei dem ersten Akteur können beispielsweise gelb, orange oder rot und die Aktionselementen bei dem zweiten Akteur können beispielsweise grün, blau oder türkis eingefärbt werden.

Weiterhin wird, wenn ermittelt wird, dass sich das Fahrzeug in dem ersten Fahrmodus befindet, das zweite grafische Element hervorgehoben dargestellt. Wird hingegen ermittelt, dass sich das Fahrzeug in dem zweiten Fahrmodus befindet, wird das erste grafische Element hervorgehoben dargestellt. Wenn ermittelt wird, dass sich das Fahrzeug in dem dritten Fahrmodus befindet, werden das erste und das zweite grafische Element hervorgehoben dargestellt. Dadurch kann vorteilhafterweise dem Fahrer auf einfache Weise dargestellt werden, welcher Akteur gerade aktiv ist. Dabei kann die Hervorhebung des ersten bzw. zweiten grafischen Elements auf die gleiche Weise erfolgen wie die Hervorhebung der Aktionselemente.

In einer weiteren Ausgestaltung des erfindungsgemäßen Verfahrens wird eine Zeit ermittelt, nach welcher das Fahrzeug von dem ermittelten Fahrmodus in einen anderen Fahrmodus wechselt. Dieses Zeitintervall kann dabei auch von einer Einrichtung des Fahrzeugs übertragen werden. Bei dem Wechsel geht die erste und/oder die zweite Aktion von dem ersten oder zweiten Akteur auf den jeweils anderen Akteur über. Es wird ein richtungsweisendes grafisches Element erzeugt, welches von dem ersten und/oder zweiten Aktionselement bei dem ersten und/oder zweiten grafischen Element zu dem jeweils anderen ersten und/oder zweiten Aktionselement bei dem zweiten bzw. ersten grafischen Element zeigt. Die ermittelte Zeit wird dann bei dem richtungsweisenden Element angezeigt. Diese Ausgestaltung beschreibt einen hochautomatischen Fahrmodus, bei dem der Fahrer in der Regel das Teilsystem nicht permanent überwachen muss. Für eine etwaige Übernahme der Fahrzeugführung erhält der Fahrer eine ausreichende Zeitreserve. Im Gegensatz hierzu, muss der Fahrer bei dem zweiten Fahrmodus keine der beiden Aktionen zu einem definierten Zeitpunkt übernehmen. Die Übernahme der Fahrzeugführung kann beispielsweise auf bestimmten Strecken oder Streckenabschnitten notwendig werden. So ist beispielsweise die automatische Spurhaltung für das Teilsystem dann nicht mehr möglich, wenn Fahrbahnmarkierungen fehlen. Der Fahrer muss dann die Fahrzeugführung selbst übernehmen.

Weiterhin kann in dem dritten Fahrmodus ein Hinweis ausgegeben werden, der anzeigt, welche Aktion von dem zweiten Akteur ausgeführt werden muss. Dadurch wird dem Fahrer vorteilhafterweise sofort verdeutlicht, welche der beiden Aktionen er selbst ausführen muss.

Zudem kann vor einem bevorstehenden Wechsel von dem zweiten oder dritten Fahrmodus in den ersten Fahrmodus, eine Warnung ausgegeben werden, die darauf hinweist, welche Aktion von dem ersten Akteur übernommen werden muss. Die Warnung wird insbesondere für ein bestimmtes Zeitintervall vor dem Wechsel angezeigt. Dadurch wird der Fahrer vorteilhafterweise darauf vorbereitet, die Fahrzeugführung und/oder die Überwachung wieder selbst zu übernehmen. Dies ermöglicht es vorteilhafterweise, zu verhindern, dass der Fahrer von einem solchen Wechsel überrascht wird.

Die Erfindung betrifft ferner ein System zum Darstellen von Fahrmodi eines Fahrzeugs, wobei das Fahrzeug in zumindest zwei unterschiedlichen Fahrmodi betreibbar ist. Das System umfasst insbesondere eine Ermittlungseinheit, mittels welcher ermittelbar ist, ob das Fahrzeug in dem ersten oder dem zweiten Fahrmodus betrieben wird, wobei in dem ersten Fahrmodus mittels eines zweiten Akteurs eine erste Aktion ausführbar ist und in dem zweiten Fahrmodus mittels eines ersten Akteurs die erste Aktion ausführbar ist. Zudem umfasst das System eine Anzeigefläche, auf welcher ein erstes grafisches Element erzeugbar ist, welches den ersten Akteur repräsentiert, und ein zweites grafisches Element erzeugbar ist, welches den zweiten Akteur repräsentiert. Der erste Akteur ist dabei ein Teilsystem zum automatischen Steuern des Fahrzeugs und/oder der zweite Akteur ist der Fahrer des Fahrzeugs. Weiterhin umfasst das System eine Steuereinheit, mittels welcher die Anzeigefläche in Abhängigkeit von der Ermittlung, ob sich das Fahrzeug in dem ersten oder dem zweiten Fahrmodus befindet, ein erstes grafisches Aktionselement, welches die erste Aktion repräsentiert, bei dem ersten und/oder zweiten grafischen Element erzeugbar ist. Das System ist insbesondere dazu ausgestaltet, das erfindungsgemäße Verfahren auszuführen. Das System weist daher alle Vorteile des erfindungsgemäßen Verfahrens auf.

Die Anzeigefläche ist insbesondere in der Windschutzscheibe des Fahrzeugs angeordnet. Es handelt sich bei der Anzeigefläche um ein sogenanntes Head-Up-Display. Der Fahrer muss dann vorteilhaftweise seinen Blick nicht von der Straße abwenden, um die Anzeige auf der Anzeigefläche zu sehen. Alternativ kann die Anzeigefläche aber auch in der Mittelkonsole des Fahrzeugs oder in dem Kombinationsinstrument des Fahrzeugs angeordnet sein.

Die Erfindung betrifft ferner ein Fahrzeug mit einem solchen System.

Die Erfindung wird nun anhand von Ausführungsbeispielen mit Bezug zu den Zeichnungen erläutert.
- Figur 1: zeigt ein Ausführungsbeispiel eines erfindungsgemäßen Systems,
- Figur 2: zeigt ein Beispiel einer Anordnung des erfindungsgemäßen Systems in einem Fahrzeug,
- Figuren 3a und 3b: zeigen Beispiele für die Ausgestaltung von grafischen Elementen, welche die Akteure repräsentieren,
- Figuren 3c und 3d: zeigen Beispiele für die Ausgestaltung von grafischen Aktionselementen,
- Figuren 4a und 4b: zeigen Anzeigen, wie sie von einem ersten Ausführungsbeispiel des erfindungsgemäßen Verfahrens auf einer Anzeigefläche erzeugt werden,
- Figuren 5a bis 5c: zeigen Anzeigen, wie sie von einem zweiten Ausführungsbeispiel des erfindungsgemäßen Verfahrens auf einer Anzeigefläche erzeugt werden, und
- Figuren 6a und 6b: zeigen Anzeigen, wie sie von einem dritten Ausführungsbeispiel des erfindungsgemäßen Verfahrens auf einer Anzeigefläche erzeugt werden.

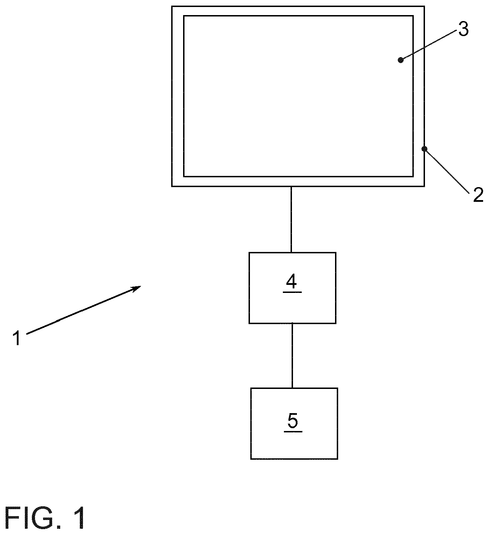

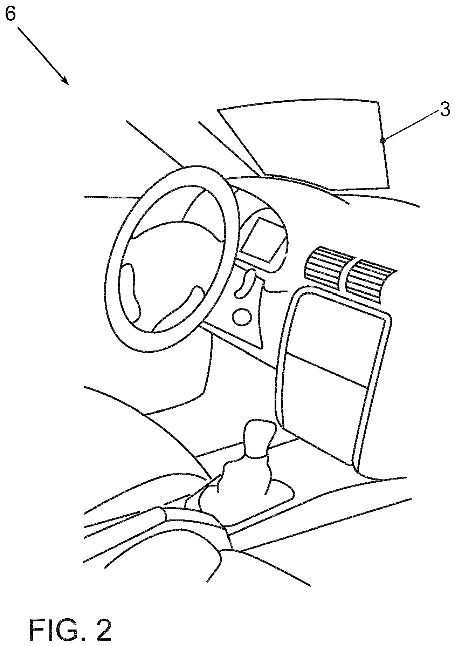

Im Folgenden wird mit Bezug zu den Figuren 1 und 2 ein Ausführungsbeispiel des erfindungsgemäßen Systems 1 sowie eine Anordnung des Systems 1 in einem Fahrzeug 6 erläutert.

Das erfindungsgemäße System 1 umfasst eine Anzeigevorrichtung 2 mit einer Anzeigefläche 3. Die Anzeigevorrichtung 2 ist mit einer Steuereinheit 4 gekoppelt, welche wiederum mit einer Ermittlungseinheit 5 gekoppelt ist.

Mittels der Ermittlungseinheit 5 ist ermittelbar, in welchem Fahrmodus das Fahrzeug 6 betrieben wird.

Die Fahrmodi, in welchen das Fahrzeug 6 betrieben werden kann, beziehen sich dabei auf einen Automationslevel, welchen das Fahrzeug 6 einnehmen kann. Die Automationslevel zeichnen sich dadurch aus, welche Aktionen von welchem Akteur ausgeführt werden. Die Akteure können dabei insbesondere der Fahrer des Fahrzeugs 6 oder ein Teilsystem des Fahrzeugs 6 zur automatisierten Fahrt sein. Ein solches Teilsystem umfasst insbesondere alle Fahrerassistenzsysteme, die bei einer teilautomatisierten Fahrt oder einer hochautomatisierten Fahrt eingesetzt werden. Solche Fahrerassistenzsysteme sind beispielsweise ein Spurhalteassistent, ein automatischer Abstandsregler, ein Geschwindigkeitsregler u.ä. Die Aktionen, die bei einer automatisierten Fahrt ausgeführt werden, sind die Fahrzeugführung oder die Überwachung. Die Überwachung wiederum umfasst die Verkehrsüberwachung und die Überwachung der Fahrzeugführung selbst.

Im vorliegenden Beispiel kann das Fahrzeug 6 in drei verschiedenen Fahrmodi betrieben werden. Der erste Fahrmodus beschreibt die manuelle Fahrt, bei welcher ein Fahrer das Fahrzeug 6 selbst führt und überwacht. Der zweite Fahrmodus beschreibt eine hochautomatische Fahrt, bei welcher das Fahrzeug 6 selbst die Führung und Überwachung übernimmt. Ein Eingreifen des Fahrers ist im hochautomatischen Fahrmodus zu keiner Zeit notwendig. Der dritte Fahrmodus beschreibt einen teilautomatischen Fahrmodus, bei dem das Fahrzeug 6 die Fahrzeugführung übernimmt und dem Fahrer die Aufgabe der Überwachung zukommt. In dem teilautomatischen Fahrmodus ist ein Eingreifen des Fahrers bei den jeweiligen Aktionen Fahrzeugführung und Überwachung möglich bzw. sogar notwendig.
Hat die Ermittlungseinheit 5 ermittelt, in welchem Fahrmodus das Fahrzeug 6 betrieben wird, kann also festgestellt werden, welcher Akteur welche Aktion ausführt.

Diese Information wird an die Steuereinheit 4 weitergeleitet. Die Steuereinheit 4 steuert die Anzeigefläche 3 derart an, dass für jeden Akteur ein grafisches Element erzeugt wird. Zudem wird in Abhängigkeit davon, welcher Akteur eine Aktion ausführt, ein grafisches Aktionselement bei dem entsprechenden Akteur erzeugt.

Die Anzeigefläche 3 ist in der Windschutzscheibe des Fahrzeugs 6 angeordnet. Die Anzeigefläche 3 ist daher Teil eines sogenannten Head-Up-Displays. Alternativ kann die Anzeigefläche 3 auch in der Mittelkonsole des Fahrzeugs 6 oder in dem Kombinationsinstrument des Fahrzeugs 6 angeordnet sein.

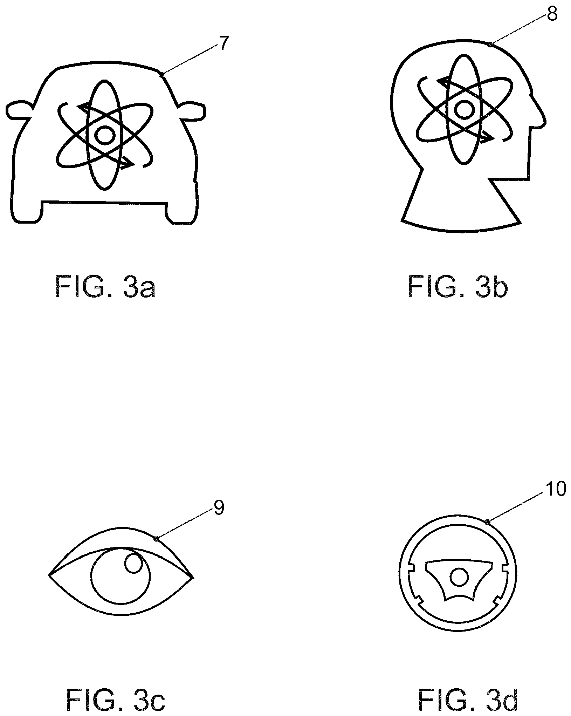

Mit Bezug zu den Figuren 3a und 3b sind Beispiele für Ausgestaltungen der grafischen Elemente 7 und 8, welche die Akteure repräsentieren, dargestellt. Das in Figur 3a gezeigte erste grafische Element 7 stellt schematisch ein Fahrzeug dar. Dadurch wird es dem Fahrer erleichtert, das erste grafische Element 7 dem Fahrzeug 6 als Akteur zuzuordnen. Das zweite grafische Element 8 stellt schematisch einen Kopf dar. Dadurch wird es dem Fahrer erleichtert, das zweite grafische Element 8 einer Person, und da er das Fahrzeug 6 fährt, sich selbst als Akteur zuordnen.

Mit Bezug zu den Figuren 3c und 3d sind Beispiele für Ausgestaltungen der grafischen Aktionselemente 9 und 10, welche die Aktionen, die von den Akteuren ausgeführt werden können, darstellen. Das erste grafische Aktionselement 9 stellt dabei schematisch ein Auge dar. Dadurch wird es dem Fahrer erleichtert, das erste grafische Element 9 der Aktion "Überwachen" zuzuordnen. Das zweite grafische Aktionselement 10 stellt schematisch ein Lenkrad dar. Dem Fahrer wird es dadurch erleichtert, das zweite grafische Aktionselement 10 der Aktion "Fahrzeugführung" zuzuordnen.

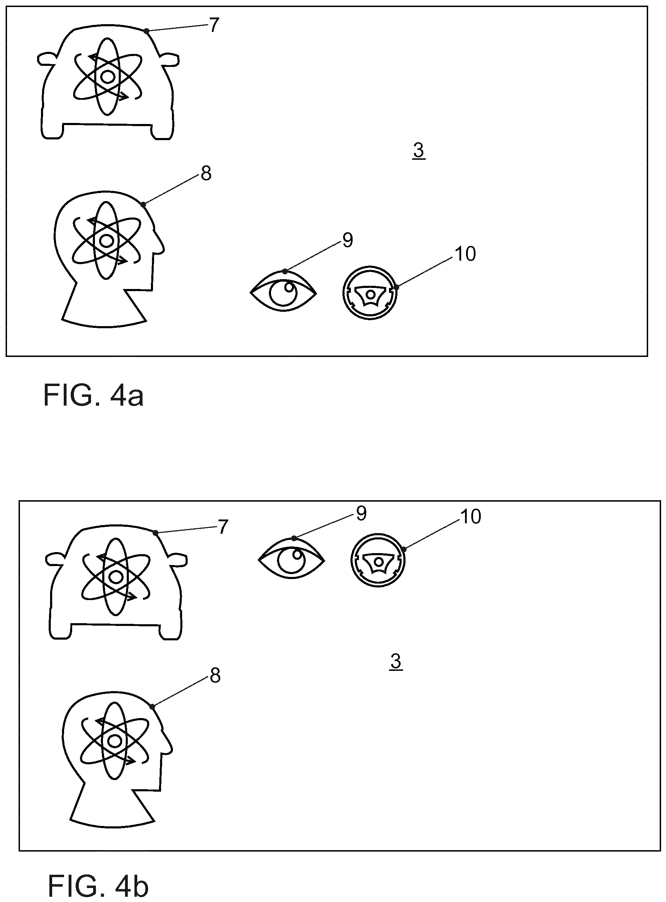

Mit Bezug zu den Figuren 4a und 4b wird ein erstes Ausführungsbeispiel des erfindungsgemäßen Verfahrens erläutert.

Ausgangspunkt ist hierbei, dass der Fahrer eine Fahrt antritt.

Nachdem der Fahrer den Motor gestartet hat, wird ermittelt, in welchem Fahrmodus das Fahrzeug 6 betrieben wird. Dies kann voreingestellt sein oder vom Fahrer manuell bei Fahrtantritt eingestellt werden.

Zudem werden auf der Anzeigefläche 3 das erste grafische Element 7, welches das Fahrzeug 6 als Akteur repräsentiert, und das zweite grafisches Element 8, welches den Fahrer als Akteur repräsentiert, untereinander dargestellt. Das erste grafische Element 7 ist dabei über dem zweiten grafischen Element 8 angeordnet. Alternativ kann natürlich auch das zweite grafische Element 8 über dem ersten grafischen Element 7 angeordnet sein.

Wird ermittelt, dass das Fahrzeug 6 in dem ersten Fahrmodus, also dem manuellen Fahrmodus, betrieben wird, wird eine Anzeige auf der Anzeigefläche 3 erzeugt, wie sie in Figur 4a gezeigt ist. Im ersten Fahrmodus führt der Fahrer sowohl die Fahrzeugführung als auch die Überwachung selbst aus. Das erste Aktionselement 9, welches die Aktion "Überwachen" repräsentiert, und das zweite Aktionselement 10, welches die Aktion "Fahrzeugführung" repräsentiert, werden daher bei dem zweiten grafischen Element 8 angezeigt. Im vorliegenden Fall bedeutet "bei" neben dem zweiten grafischen Element 8. Dadurch kann der Fahrer durch einen Blick auf die Anzeigefläche 3 sofort erfassen, dass er beide Aktionen selbst ausführen muss.

Wird hingegen ermittelt, dass das Fahrzeug 6 in dem zweiten Fahrmodus, also dem hochautomatischen Fahrmodus, betrieben wird, wird eine Anzeige auf der Anzeigefläche 3 erzeugt, wie sie in Figur 4b gezeigt ist. Im zweiten Fahrmodus führt das Fahrzeug 6 sowohl die Fahrzeugführung als auch die Überwachung aus.

Das erste Aktionselement 9, welches die Aktion "Überwachen" repräsentiert, und das zweite Aktionselement 10, welches die Aktion "Fahrzeugführung" repräsentiert, werden daher bei dem ersten grafischen Element 7, angezeigt. Im vorliegenden Fall bedeutet "bei" wiederum neben dem ersten grafischen Element 7. Dadurch kann der Fahrer durch einen Blick auf die Anzeigefläche 3 sofort erfassen, dass er keine der beiden Aktionen selbst ausführen muss und sich anderen Tätigkeiten widmen kann.

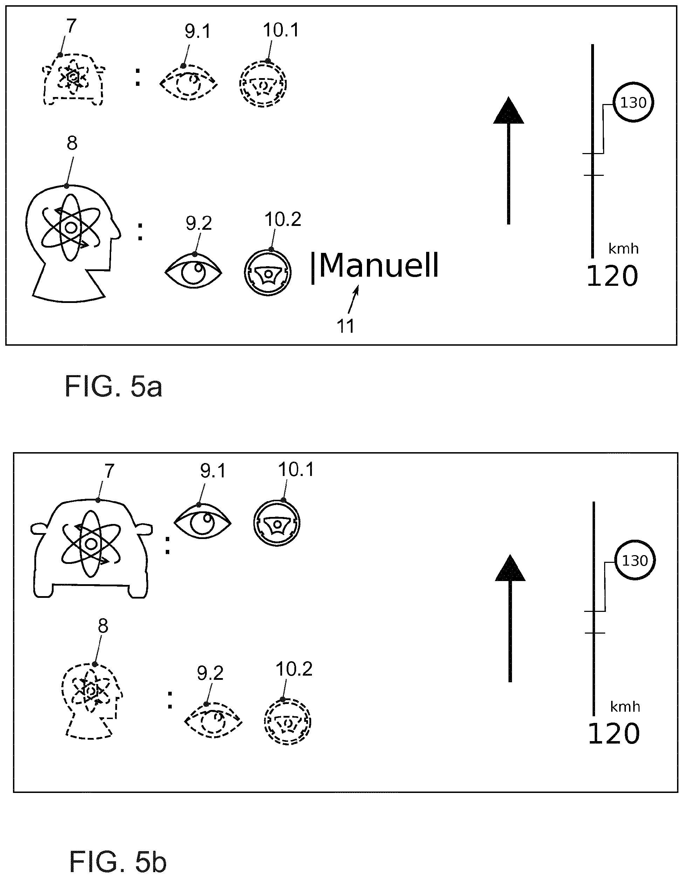

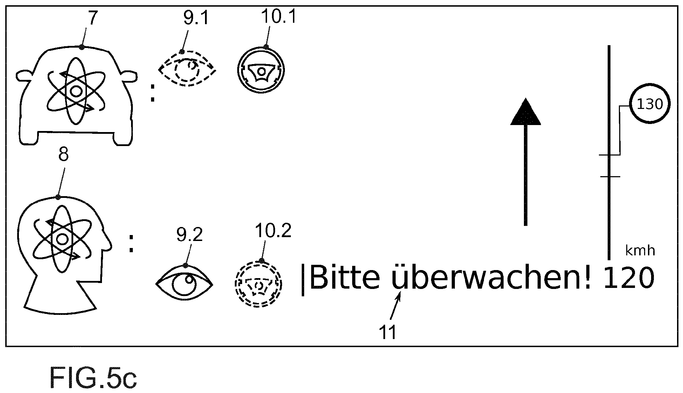

Mit Bezug zu den Figuren 5a, 5b und 5c wird ein weiteres Ausführungsbeispiel des erfindungsgemäßen Verfahrens erläutert.

Ausgangssituation ist dabei wieder, dass der Fahrer eine Fahrt antritt.

Es werden zunächst das erste grafische Element 7 und das zweite grafische Element 8 untereinander auf der Anzeigefläche 3 erzeugt. Jeweils neben dem ersten 7 und dem zweiten grafischen Element 8 werden die grafischen Aktionselemente 9 und 10 angezeigt.

Dabei werden die grafischen Elementen 7 und 8 und die Aktionselemente 9.1 und 10.1 und 9.2 und 10.2 farbcodiert angezeigt. Das grafische Element 7 und die dem grafischen Element 7 zugeordneten Aktionselemente 9.1 und 10.1 werden beispielsweise in orange und das grafische Element 8 und die dem grafischen Element 8 zugeordneten Aktionselemente 9.2 und 10.2 in türkis angezeigt.

Es wird ermittelt, in welchem Fahrmodus das Fahrzeug 6 betrieben wird. Dies kann wiederum voreingestellt sein oder vom Fahrer bei Fahrtantritt manuell eingestellt werden.

Wird ermittelt, dass das Fahrzeug 6 in dem ersten Fahrmodus, also dem manuellen Fahrmodus betrieben wird, wird eine Anzeige wie sie in Figur 5a gezeigt ist, angezeigt.

Es wird dann das zweite grafische Element 8 im Vergleich zum ersten grafischen Element 7 hervorgehoben dargestellt. Das zweite grafische Element 8 wird dadurch hervorgehoben dargestellt, dass es im Vergleich zum ersten grafischen Element 7 größer dargestellt wird. Zudem wird das erste grafische Element 7 ausgegraut, also nicht mehr orange sondern grau, dargestellt. Dies zeigt dem Fahrer an, dass der Akteur, welcher dem zweiten grafischen Element 8 zugeordnet ist, also der Fahrer, im vorliegenden Fahrmodus überhaupt eine Aktion ausführen muss und somit der aktive Akteur ist. Der andere Akteur hingegen ist inaktiv.

Weiterhin sind beide grafische Aktionselement 9.2 und 10.2, die neben dem zweiten grafischen Element 8 angezeigt werden, im Vergleich zu den grafischen Aktionselement 9.1 und 10.1, die neben dem ersten grafischen Element 7 angezeigt werden, hervorgehoben dargestellt. Die beiden grafischen Aktionselemente 9.2 und 10.2 werden dadurch hervorgehoben dargestellt, dass die grafischen Aktionselemente 9.1 und 10.1 ausgegraut, also nicht mehr orange sondern grau, dargestellt werden. Dadurch wird dem Fahrer dargestellt, welche Aktionen dem aktiven Akteur, also im vorliegenden Fall ihm selbst, zukommen. Zusätzlich oder alternativ können die grafischen Aktionselemente 9.2 und 10.2 auch größer dargestellt werden als die Aktionselemente 9.1 und 10.1.

Weiterhin wird neben den Aktionselementen 9.2 und 10.2 ein Hinweis 11 angezeigt, der den Fahrer darauf hinweist, dass manuell gefahren wird.

Alternativ können das erste grafische Element 7 und die ihm zugeordneten Aktionselemente 9.1 und 10.1 auch ausgeblendet werden.

Wird ermittelt, dass das Fahrzeug 6 in dem zweiten Fahrmodus, also dem hochautomatischen Fahrmodus, betrieben wird, wird eine Anzeige wie sie in Figur 5b gezeigt ist, angezeigt.

Dabei wird das erste grafische Element 7 im Vergleich zum zweiten grafischen Element 8 hervorgehoben dargestellt. Das erste grafische Element 7 wird dadurch hervorgehoben dargestellt, dass es im Vergleich zum zweiten grafischen Element 8 größer dargestellt wird. Zudem wird das zweite grafische Element 8 gegenüber dem ersten grafischen Element 7 ausgegraut, also nicht mehr türkis sondern grau, dargestellt. Dies zeigt dem Fahrer an, dass der Akteur, welcher dem ersten grafischen Element 7 zugeordnet ist, also das Fahrzeug 6, im vorliegenden Fahrmodus überhaupt eine Aktion ausführen muss und somit der aktive Akteur ist. Der andere Akteur hingegen ist inaktiv.

Weiterhin sind die beiden grafischen Aktionselemente 9.1 und 10.1, die neben dem ersten grafischen Element 8 angezeigt werden, im Vergleich zu den grafischen Aktionselementen 9.2 und 10.2, die neben dem zweiten grafischen Element 8 angezeigt werden, hervorgehoben dargestellt. Die beiden grafischen Aktionselemente 9.1 und 10.1 werden dadurch hervorgehoben dargestellt, dass die grafischen Aktionselemente 9.2 und 10.2 ausgegraut, also nicht mehr türkis sondern grau, dargestellt werden. Dadurch wird dem Fahrer dargestellt, welche Aktionen dem aktiven Akteur, also im vorliegenden Fall dem Fahrzeug 6, zukommen.

Da der Fahrer im Falle des zweiten Fahrmodus keine Aktion selbst ausführen muss, wird auch kein Hinweis ausgegeben.

Alternativ können das zweite grafische Element 8 und die ihm zugeordneten Aktionselemente 9.2 und 10.2 auch ausgeblendet werden.

Wird ermittelt, dass das Fahrzeug 6 in dem dritten Fahrmodus, also einem der teilautomatischen Fahrmodi betrieben wird, wird eine Anzeige wie sie in Figur 5c gezeigt ist, angezeigt.

Da in diesem Fall jedem der beiden Akteure eine der beiden Aktionen zukommt, wird keines der beiden grafischen Elemente 7 oder 8 hervorgehoben dargestellt. Dadurch wird dem Fahrer angezeigt, dass beide Akteure eine Aktion ausführen.

Im dritten Fahrmodus übernimmt der Fahrer die Aufgabe "Überwachen" und das Fahrzeug 6 die Aufgabe "Fahrzeugführung".

Dies wird dem Fahrer dadurch dargestellt, dass das erste Aktionselement 9.2 neben dem zweiten grafischen Element 8 im Vergleich zum ersten Aktionselement 9.1 neben dem ersten grafischen Element 7 hervorgehoben dargestellt wird. Gleichzeitig wird das zweite Aktionselement 10.1 neben dem ersten grafischen Element 7 im Vergleich zum zweiten Aktionselement 10.2 neben dem zweiten grafischen Element 8 hervorgehoben dargestellt.

Die Aktionselemente 9.2 und 10.1 werden dabei wiederum dadurch hervorgehoben dargestellt, dass die Aktionselemente 9.1 und 10.2 ausgegraut, also nicht mehr orange bzw. türkis sondern grau, dargestellt werden. Alternativ oder gleichzeitig können sie auch größer dargestellt werden.

Da der Fahrer nun die Überwachung selbst ausführen muss, wird neben den Aktionselementen 9.2 und 10.2 ein Hinweis 11 "Bitte überwachen" angezeigt. Dadurch ist dem Fahrer sofort klar welche Aufgabe ihm zukommt.

Alternativ können die ausgegrauten, also die als inaktiv angezeigten Aktionselemente 9.1 und 10.2, auch ausgeblendet werden.

Die restlichen in den Figuren 5a bis 5c auf der Anzeigefläche 3 angezeigten Anzeigeelemente sind Teil einer Navigationsfunkion des Fahrzeugs 6. Dabei wird dem Fahrer die Richtung angezeigt, in welche erfahren muss.

Zudem wird die momentane Geschwindigkeit des Fahrzeugs 6 angezeigt. Weiterhin wird angezeigt, dass auf der Strecke ein Wechsel der erlaubten Höchstgeschwindigkeit bevorsteht.

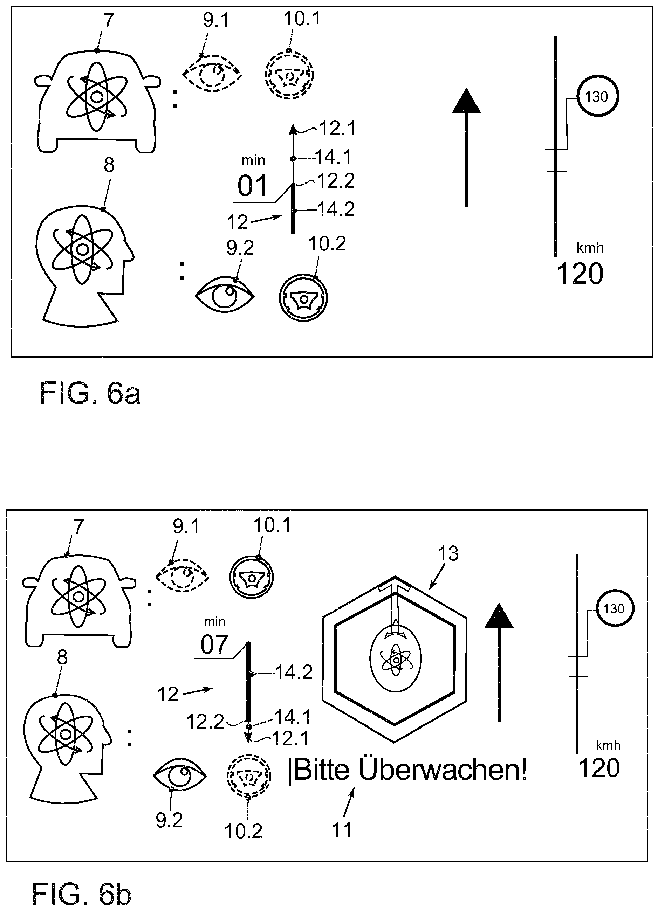

Mit Bezug zu den Figuren 6a und 6b wird ein drittes Ausführungsbeispiel des erfindungsgemäßen Verfahrens erläutert.

Die Ausgangssituation bei dem dritten Ausführungsbeispiel ist dabei, dass ermittelt wurde, dass das Fahrzeug 6 in einem der Fahrmodi betrieben wird und entsprechend eine Anzeige auf der Anzeigefläche 3 angezeigt wird.

Es wird dann ermittelt, dass ein Fahrmoduswechsel bevorsteht.

Im Fall der Figur 6a wird zunächst ermittelt, dass das Fahrzeug 6 im ersten Fahrmodus betrieben wird, der Fahrer also sowohl Fahrzeugführung als auch Überwachung übernimmt. Es wird daher als Ausgangsanzeige die Anzeige der Figur 5a angezeigt, jedoch ohne Hinweis 11, der lediglich alternativ angezeigt wird.

Es wird dann eine Zeit ermittelt, nach welcher das Fahrzeug 6 von dem ersten Fahrmodus in den dritten Fahrmodus wechselt. Dabei geht die Aktion "Fahrzeugführung" auf das Fahrzeug 6 über, während die Aktion "Überwachen" beim Fahrer verbleibt. Im vorliegenden Beispiel wird ermittelt, dass dieser Wechsel in einer Minute ausgeführt wird.

Es wird ein richtungsweisendes grafisches Element 12 zwischen den Aktionselementen 10.1 und 10.2 erzeugt. Das richtungsweisende grafische Element 12 ist dabei als Pfeil ausgestaltet. Der Pfeil 12 zeigt von dem Aktionselement 10.2 zu dem Aktionselement 10.1. Dadurch wird dem Fahrer angezeigt, dass die Aktion "Fahrzeugführung" von dem Akteur Fahrer, dem das Aktionselement 10.2 zugeordnet ist, auf den Akteur Fahrzeug 6, dem das Aktionselement 10.1 zugeordnet ist, übergeht.

Zudem wird neben dem richtungsweisenden grafischen Element 12 numerisch die ermittelte Zeit, nämlich 1 Minute bis zum Übergang der Aktion, angezeigt.

Der Pfeil 12 umfasst eine Linie 12.1 und eine Spitze 12.2. Ein Teil 14.1 der Linie 12.1 wird im Vergleich zum anderen Teil 14.2 der Linie 12.1 hervorgehoben dargestellt. Dabei ist die Länge des Teils 14.1 der Linie 12.1, der hervorgehoben dargestellt wird, abhängig von der ermittelten Zeit.

Der hervorgehoben dargestellte Teil 14.1 der Linie 12.1 wird immer kürzer, je kürzer die verbleibende Zeit ist. Die verbleibende Zeit wird dem Fahrer daher neben der numerischen Anzeige auch über die Abnahme des hervorgehoben dargestellten Teils 14.1 der Linie 12.1 angezeigt.

Der hervorgehoben dargestellte Teil 14.1 wird dadurch hervorgehoben, dass die Liniendicke im hervorgehoben dargestellten Teil 14.1 größer gewählt wird als im nicht hervorgehoben dargestellten Teil 14.2.

Alternativ kann der dicker dargestellte Teil 14.1 der Pfeillinie 12.1 auch immer länger werden, je kürzer die ermittelte Zeit ist. Dadurch läuft im vorliegenden Beispiel der dicker dargestellte Teil 14.1 der Pfeillinie 12.1 auf das Aktionselement 10.1 zu.

Im Beispiel der Figur 6b wird ermittelt, dass das Fahrzeug 6 im dritten Fahrmodus betrieben wird. Zudem wird ermittelt, dass nach sieben Minuten ein Wechsel in den ersten Fahrmodus stattfindet. Dadurch geht die Aufgabe der Fahrzeugführung vom Fahrzeug 6 auf den Fahrer über.

Es wird daher wiederum ein richtungsweisendes grafisches Element 12, wieder ein Pfeil, angezeigt, der diesmal jedoch von dem Aktionselement 10.1 zu dem Aktionselement 10.2 zeigt. Neben dem Pfeil 12 ist numerisch die Zeit, die bis zum Fahrmoduswechsel verbleibt, angezeigt.

Weiterhin wird wieder ein Teil 14.1 der Pfeillinie 12.1 dadurch hervorgehoben dargestellt, dass er dicker als der nicht hervorgehoben dargestellte Teil 14.2 der Pfeillinie 12.1 angezeigt wird. Die Länge des hervorgehoben dargestellten Teils 14.1 der Pfeillinie 12.1 ist wiederum abhängig von der ermittelten verbleibenden Zeit bis zum Fahrmoduswechsel. Die Länge des hervorgehoben dargestellte Teils 14.1 des Pfeils 12 wird dynamisch an die verbleibende Zeit angepasst.

Zudem ist in Figur 6b ein weiteres grafisches Element 13 gezeigt, welches dem Fahrer verdeutlicht, dass er momentan die Aktion "Überwachen" ausführen muss.

Auf der Anzeigefläche 3 kann zusätzlich eine Warnung ausgegeben werden, die den Fahrer vor dem Fahrmoduswechsel warnt. Dadurch wird der Fahrer nicht davon überrascht, dass er eine der Aktionen, die er vorher nicht ausgeführt hat, nun selbst ausführen muss.

### Bezugszeichenliste

- 1: System
- 2: Anzeigevorrichtung
- 3: Anzeigefläche
- 4: Steuereinheit
- 5: Ermittlungseinheit
- 6: Fahrzeug
- 7: erstes grafisches Element
- 8: zweites grafisches Element
- 9: erstes grafisches Aktionselement
- 10: zweites grafisches Aktionselement
- 11: Hinweis
- 12: richtungsweisendes Element; Pfeil
- 12.1: Pfeillinie
- 12.1: Pfeilspitze
- 13: grafisches Element
- 14.1: hervorgehoben dargestellter Teil der Pfeillinie
- 14.2: nicht hervorgehoben dargestellter Teil der Pfeillinie

## Patentansprüche

1. Verfahren zum Darstellen von Fahrmodi eines Fahrzeugs (6), wobei das Fahrzeug (6) in zumindest zwei unterschiedlichen Fahrmodi betreibbar ist, bei dem
ermittelt wird, ob das Fahrzeug (6) in einem ersten oder einem zweiten Fahrmodus betrieben wird, wobei in dem ersten Fahrmodus ein zweiter Akteur eine erste Aktion ausführt und in dem zweiten Fahrmodus ein erster Akteur die erste Aktion ausführt, wobei der erste Akteur ein Teilsystem zum automatischen Steuern des Fahrzeugs (6) ist und/oder der zweite Akteur der Fahrer des Fahrzeugs (6) ist, wobei
auf einer Anzeigefläche (3) ein erstes grafisches Element (7) erzeugt wird, welches den ersten Akteur repräsentiert,
**dadurch gekennzeichnet, dass**
auf der Anzeigefläche (3) ein zweites grafisches Element (8) erzeugt wird, welches den zweiten Akteur repräsentiert, und
in Abhängigkeit davon, ob sich das Fahrzeug (6) in dem ersten oder dem zweiten Fahrmodus befindet, ein erstes grafisches Aktionselement (9, 10), welches die erste Aktion repräsentiert, bei dem ersten (7) und/oder zweiten grafischen Element (8) erzeugt wird.

2. Verfahren nach Anspruch 1,
**dadurch gekennzeichnet, dass**
von dem ersten oder dem zweiten Akteur zumindest eine zweite Aktion ausgeführt wird, wobei in Abhängigkeit von der Ermittlung, ob sich das Fahrzeug (6) in dem ersten oder dem zweiten Fahrmodus befindet, ein zweites grafisches Aktionselement (9.1, 9.2, 10.1, 10.2), welches die zweite Aktion repräsentiert, bei dem ersten (7) und/oder zweiten grafischen Element (8) erzeugt wird.

3. Verfahren nach Anspruch 2,
**dadurch gekennzeichnet, dass,**
die erste Aktion ein Überwachen des Fahrzeugs (6) und/oder die zweite Aktion eine Fahrzeugführung des Fahrzeugs (6) umfasst.

4. Verfahren nach einem der Ansprüche 2 bis 3,
**dadurch gekennzeichnet, dass**
in dem ersten Fahrmodus der zweite Akteur die erste und die zweite Aktion ausführt, in dem zweiten Fahrmodus der erste Akteur die erste und die zweite Aktion ausführt und in einem dritten Fahrmodus der erste Akteur die zweite Aktion und der zweite Akteur die erste Aktion ausführt.

5. Verfahren nach Anspruch 4,
**dadurch gekennzeichnet, dass**
in dem ersten Fahrmodus das Fahrzeug (6) manuell geführt wird, in dem zweiten Fahrmodus das Fahrzeug (6) hochautomatisch geführt wird und in dem dritten Fahrmodus das Fahrzeug (6) teilautomatisch geführt wird.

6. Verfahren nach Anspruch 4 oder 5,
**dadurch gekennzeichnet, dass**
ermittelt wird, in welchem Fahrmodus sich das Fahrzeug (6) befindet,
wenn ermittelt wird, dass sich das Fahrzeug (6) in dem ersten Fahrmodus befindet, das erste (9, 9.1, 9.2) und das zweite grafische Aktionselement (10, 10.1, 10.2) bei dem zweiten grafischen Element (8) erzeugt werden,
wenn ermittelt wird, dass sich das Fahrzeug (6) in dem zweiten Fahrmodus befindet, das erste (9, 9.1, 9.2) und das zweite grafische Aktionselement (10, 10.1, 10.2) bei dem ersten grafischen Element (7) erzeugt werden, und,
wenn ermittelt wird, dass sich das Fahrzeug (6) in dem dritten Fahrmodus befindet,
das erste Aktionselement (9, 9.1, 9.2) bei dem zweiten grafischen Element (8) und das zweite Aktionselement (10, 10.1, 10.2) bei dem ersten grafischen Element (7) erzeugt wird.

7. Verfahren nach Anspruch einem der Ansprüche 4 bis 6,
**dadurch gekennzeichnet, dass**
ermittelt wird, in welchem Fahrmodus sich das Fahrzeug (6) befindet,
unabhängig davon, in welchem Fahrmodus sich das Fahrzeug (6) befindet, das erste (9, 9.1, 9.2) und das zweite grafische Aktionselement (10, 10.1, 10.2) bei dem ersten (7) und bei dem zweiten grafischen Element (8) erzeugt werden, wobei,
wenn ermittelt wird, dass sich das Fahrzeug (6) in dem ersten Fahrmodus befindet, das erste (9, 9.1, 9.2) und das zweite Aktionselement (10, 10.1, 10.2) bei dem zweiten grafischen Element (8) hervorgehoben dargestellt werden,
wenn ermittelt wird, dass sich das Fahrzeug (6) in dem zweiten Fahrmodus befindet, das erste (9, 9.1, 9.2) und das zweite Aktionselement (10, 10.1, 10.2) bei dem ersten grafischen (7) Element hervorgehoben dargestellt werden, und,
wenn ermittelt wird, dass sich das Fahrzeug (6) in dem dritten Fahrmodus befindet, das erste Aktionselement (9, 9.1, 9.2) bei dem zweiten grafischen Element (8) und das zweite Aktionselement (10, 10.1, 10.2) bei dem ersten grafischen Element (7) hervorgehoben dargestellt werden.

8. Verfahren nach einem der Ansprüche 4 bis 7,
**dadurch gekennzeichnet, dass,**
wenn ermittelt wird, dass sich das Fahrzeug (6) in dem ersten Fahrmodus befindet, das zweite grafische Element (8) hervorgehoben dargestellt wird,
wenn ermittelt wird, dass sich das Fahrzeug (6) in dem zweiten Fahrmodus befindet, das erste grafische Element (7) hervorgehoben dargestellt wird, und,
wenn ermittelt wird, dass sich das Fahrzeug (6) in dem dritten Fahrmodus befindet, das erste (7) und das zweite grafische Element (8) hervorgehoben dargestellt werden.

9. Verfahren nach Anspruch einem der Ansprüche 2 bis 8,
**dadurch gekennzeichnet, dass**
eine Zeit ermittelt wird, nach welcher das Fahrzeug (6) von dem ermittelten Fahrmodus in einen anderen Fahrmodus wechselt, wobei die erste und/oder die zweite Aktion von dem ersten oder zweiten Akteur auf den jeweils anderen Akteur übergeht,
ein richtungsweisendes grafisches Element (12) erzeugt wird, welches von dem ersten (9.1, 9.2) und/oder zweiten Aktionselement (10.1, 10.2) bei dem ersten (7) und/oder zweiten grafischen Element (8) zu dem jeweils anderen ersten (9.1, 9.2) und/oder zweiten Aktionselement (10.2) zeigt, und
die ermittelte Zeit bei dem richtungsweisenden Element (12) angezeigt wird.

10. Verfahren nach einem der Ansprüche 4 bis 9,
**dadurch gekennzeichnet, dass**
in dem dritten Fahrmodus ein Hinweis (11) ausgegeben wird, der anzeigt, welche Aktion von dem zweiten Akteur ausgeführt werden muss.

11. Verfahren nach einem der Ansprüche 4 bis 10,
**dadurch gekennzeichnet, dass**
vor einem bevorstehenden Wechsel von dem zweiten oder dritten Fahrmodus in den ersten Fahrmodus eine Warnung ausgegeben wird, die den zweiten Akteur darauf hinweist, welche Aktion von ihm übernommen werden muss.

12. System (1) zum Darstellen von Fahrmodi eines Fahrzeugs (6), wobei das Fahrzeug (6) in zumindest zwei unterschiedlichen Fahrmodi betreibbar ist, mit
einer Ermittlungseinheit (5), mittels welcher ermittelbar ist, ob das Fahrzeug (6) in dem ersten oder dem zweiten Fahrmodus betrieben wird, wobei in dem ersten Fahrmodus mittels eines zweiten Akteurs eine erste Aktion ausführbar ist und in dem zweiten Fahrmodus mittels eines ersten Akteurs die erste Aktion ausführbar ist, wobei der erste Akteur ein Teilsystem zum automatischen Steuern des Fahrzeugs (6) ist und/oder der zweite Akteur der Fahrer des Fahrzeugs (6) ist, und
einer Anzeigefläche (3), auf welcher ein erstes grafisches Element (7) erzeugbar ist, welches den ersten Akteur repräsentiert,
**dadurch gekennzeichnet, dass**
auf der Anzeigefläche (3) ein zweites grafisches Element (8) erzeugbar ist, welches den zweiten Akteur repräsentiert, und
das System eine Steuereinheit (4) umfasst, mittels welcher auf der Anzeigefläche (3) in Abhängigkeit von der Ermittlung, ob sich das Fahrzeug (6) in dem ersten oder dem zweiten Fahrmodus befindet, ein erstes grafisches Aktionselement (9, 10), welches die erste Aktion repräsentiert, bei dem ersten (7) und/oder zweiten grafischen Element (8) erzeugbar ist.

13. System (1) nach Anspruch 12,
**dadurch gekennzeichnet, dass**
die Anzeigefläche (3) in der Windschutzscheibe des Fahrzeugs (6) angeordnet ist.

14. Fahrzeug (6) mit einem System (1) nach Anspruch 12 oder 13.

## Claims

1. Method for displaying driving modes of a vehicle (6), wherein the vehicle (6) can be operated in at least two different driving modes, in which method it is determined whether the vehicle (6) is being operated in a first or a second driving mode, wherein in the first driving mode a second agent carries out a first action, and in the second driving mode a first agent carries out the first action, wherein the first agent is a subsystem for automatically controlling the vehicle (6), and/or the second agent is the driver of the vehicle (6), wherein
a first graphic element (7) which represents the first agent is generated on a display area (3),
**characterized in that**
a second graphic element (8) which represents the second agent is generated on the display area (3),
and
a first graphic action element (9, 10) which represents the first action is generated at the first graphic element (7) and/or the second graphic element (8) depending on whether the vehicle (6) is in the first or the second driving mode.

2. Method according to Claim 1,
**characterized in that**
at least one second action is carried out by the first or the second agent, wherein a second graphic action element (9.1, 9.2, 10.1, 10.2) which represents the second action is generated at the first graphic element (7) and/or the second graphic element (8) depending on the determination as to whether the vehicle (6) is in the first driving mode or the second driving mode.

3. Method according to Claim 2,
**characterized in that**
the first action comprises monitoring of the vehicle (6) and/or the second action comprises vehicle guiding of the vehicle (6).

4. Method according to one of Claims 2 to 3,
**characterized in that**
in the first driving mode the second agent carries out the first and the second action, in the second driving mode the first agent carries out the first and the second action, and in a third driving mode the first agent carries out the second action and the second agent carries out the first action.

5. Method according to Claim 4,
**characterized in that**
in the first driving mode the vehicle (6) is guided manually, in the second driving mode the vehicle (6) is guided in a highly automatic fashion, and in the third driving mode the vehicle (6) is guided partially automatically.

6. Method according to Claim 4 or 5,
**characterized in that**
the driving mode which the vehicle (6) is in is determined;
and if it is determined that the vehicle (6) is in the first driving mode, the first graphic action element (9, 9.1, 9.2) and the second graphic action element (10, 10.1, 10.2) are generated at the second graphic element (8);
if it is determined that the vehicle (6) is in the second driving mode, the first graphic action element (9, 9.1, 9.2) and the second graphic action element (10, 10.1, 10.2) are generated at the first graphic element (7); and
if it is determined that the vehicle (6) is in the third driving mode, the first action element (9, 9.1, 9.2) is generated at the second graphic element (8), and the second action element (10, 10.1, 10.2) is generated at the first graphic element (7).

7. Method according to one of Claims 4 to 6,
**characterized in that**
the driving mode which the vehicle (6) is in is determined;
irrespective of the driving mode which the vehicle (6) is in, the first graphic action element (9, 9.1, 9.2) and the second graphic action element (10, 10.1, 10.2) are generated at the first graphic element (7) and at the second graphic element (8); wherein
if it is determined that the vehicle (6) is in the first driving mode, the first action element (9, 9.1, 9.2) and the second action element (10, 10.1, 10.2) are displayed in a highlighted fashion at the second graphic element (8);
if it is determined that the vehicle (6) is in the second driving mode, the first action element (9, 9.1, 9.2) and the second action element (10, 10.1, 10.2) are displayed in a highlighted fashion at the first graphic element (7); and
if it is determined that the vehicle (6) is in the third driving mode, the first action element (9, 9.1, 9.2) is displayed in a highlighted fashion at the second graphic element (8), and the second action element (10, 10.1, 10.2) is displayed in a highlighted fashion at the first graphic element (7).

8. Method according to one of Claims 4 to 7,
**characterized in that**
if it is determined that the vehicle (6) is in the first driving mode, the second graphic element (8) is displayed in a highlighted fashion;
if it is determined that the vehicle (6) is in the second driving mode, the first graphic element (7) is displayed in a highlighted fashion; and
if it is determined that the vehicle (6) is in the third driving mode, the first graphic element (7) and the second graphic element (8) are displayed in a highlighted fashion.

9. Method according to one of Claims 2 to 8,
**characterized in that**
a time after which the vehicle (6) changes from the determined driving mode into another driving mode is determined, wherein the first and/or the second actions change(s) from the first or second agent over to the respective other agent,
a direction-indicating graphic element (12) is generated which points from the first action element (9.1, 9.2) and/or the second action element (10.1, 10.2) at the first graphic element (7) and/or the second graphic element (8) towards the respective other first action element (9.1, 9.2) and/or second action element (10.2), and
the determined time is indicated on the direction-indicating element (12).

10. Method according to one of Claims 4 to 9,
**characterized in that**
in the third driving mode a message (11) is output which indicates which action has to be carried out by the second agent.

11. Method according to one of Claims 4 to 10,
**characterized in that**
a warning which indicates to the second agent which action has to be taken over by him is output before an imminent changeover from the second or the third driving mode into the first driving mode.

12. System (1) for displaying driving modes of a vehicle (6), wherein the vehicle (6) can be operated in at least two different driving modes, having
a determining unit (5) by means of which it is possible to determine whether the vehicle (6) is being operated in the first or the second driving mode, wherein in the first driving mode a first action can be carried out by means of a second agent, and in the second driving mode the first action can be carried out by means of a first agent, wherein the first agent is a subsystem for automatically controlling the vehicle (6), and/or the second agent is the driver of the vehicle (6), and
a display area (3) on which a first graphic element (7) which represents the first agent can be generated,
**characterized in that**
a second graphic element (8) which represents the second agent can be generated on the display area (3),
and
the system comprises a control unit (4) by means of which
a first graphic element (9, 10) which represents the first action can be generated on the display area (3) at the first graphic element (7) and/or the second graphic element (8) in accordance with the determination as to whether the vehicle (6) is in the first driving mode or the second driving mode.

13. System (1) according to Claim 12,
**characterized in that**
the display area (3) is arranged in the windscreen of the vehicle (6).

14. Vehicle (6) having a system (1) according to Claim 12 or 13.

## Revendications

1. Procédé de représentation des modes de conduite d'un véhicule (6), le véhicule (6) pouvant être utilisé dans au moins deux modes de conduite différents, avec lequel une détermination est effectuée afin de savoir si le véhicule (6) est utilisé dans un premier ou dans un deuxième mode de conduite, un deuxième acteur accomplissant une première action dans le premier mode de conduite et, dans le deuxième mode de conduite, un premier acteur accomplissant la première action, le premier acteur étant un système partiel servant à la commande automatique du véhicule (6) et/ou le deuxième actionneur étant le conducteur du véhicule (6),
un premier élément graphique (7) étant généré sur une surface d'affichage (3), lequel représente le premier acteur,
**caractérisé en ce que**
un deuxième élément graphique (8) est généré sur la surface d'affichage (3), lequel représente le deuxième acteur,
et
suivant que le véhicule (6) se trouve dans le premier ou dans le deuxième mode de conduite, un premier élément d'action (9, 10) graphique, lequel représente la première action, est généré près du premier (7) et/ou du deuxième élément graphique (8).

2. Procédé selon la revendication 1, **caractérisé en ce qu'**au moins une deuxième action est accomplie par le premier ou le deuxième acteur, un deuxième élément d'action (9.1, 9.2, 10.1, 10.2) graphique, lequel représente la deuxième action, est généré près du premier (7) et/ou du deuxième élément graphique (8) suivant la détermination que le véhicule (6) se trouve dans le premier ou dans le deuxième mode de conduite.

3. Procédé selon la revendication 2, **caractérisé en ce que** la première action comprend une surveillance du véhicule (6) et/ou la deuxième action comprend un guidage du véhicule (6).

4. Procédé selon l'une des revendications 2 à 3, **caractérisé en ce que** dans le premier mode de conduite, le deuxième acteur accomplit la première et la deuxième action, dans le deuxième mode de conduite, le premier acteur accomplit la première et la deuxième action et dans un troisième mode de conduite, le premier acteur accomplit la deuxième action et le deuxième acteur la première action.

5. Procédé selon la revendication 4, **caractérisé en ce que** dans le premier mode de conduite, le véhicule (6) est guidé manuellement, dans le deuxième mode de conduite, le véhicule (6) est guidé de manière hautement automatisée et dans le troisième mode de conduite, le véhicule (6) est guidé de manière partiellement automatisée.

6. Procédé selon la revendication 4 ou 5, **caractérisé en ce que**
une détermination est effectuée afin de savoir dans quel mode de conduite se trouve le véhicule (6),
lorsqu'il est déterminé que le véhicule (6) se trouve dans le premier mode de conduite, le premier (9, 9.1, 9.2) et le deuxième élément d'action (10, 10.1, 10.2) graphique sont générés près du deuxième élément graphique (8),
lorsqu'il est déterminé que le véhicule (6) se trouve dans le deuxième mode de conduite, le premier (9, 9.1, 9.2) et le deuxième élément d'action (10, 10.1, 10.2) graphique sont générés près du premier élément graphique (7),
lorsqu'il est déterminé que le véhicule (6) se trouve dans le troisième mode de conduite, le premier élément d'action (9, 9.1, 9.2) est généré près du deuxième élément graphique (8) et le deuxième élément d'action (10, 10.1, 10.2) est généré près du premier élément graphique (7) .

7. Procédé selon l'une des revendications 4 à 6, **caractérisé en ce que**
une détermination est effectuée afin de savoir dans quel mode de conduite se trouve le véhicule (6), indépendamment du mode de conduite dans lequel se trouve le véhicule (6), le premier (9, 9.1, 9.2) et le deuxième élément d'action (10, 10.1, 10.2) graphique sont générés près du premier (7) et près du deuxième élément graphique (8),
lorsqu'il est déterminé que le véhicule (6) se trouve dans le premier mode de conduite, le premier (9, 9.1, 9.2) et le deuxième élément d'action (10, 10.1, 10.2) sont représentés mis en valeur près du deuxième élément graphique (8),
lorsqu'il est déterminé que le véhicule (6) se trouve dans le deuxième mode de conduite, le premier (9, 9.1, 9.2) et le deuxième élément d'action (10, 10.1, 10.2) sont représentés mis en valeur près du premier élément graphique (7),
lorsqu'il est déterminé que le véhicule (6) se trouve dans le troisième mode de conduite, le premier élément d'action (9, 9.1, 9.2) est représenté mis en valeur près du deuxième élément graphique (8) et le deuxième élément d'action (10, 10.1, 10.2) près du premier élément graphique (7).

8. Procédé selon l'une des revendications 4 à 7, **caractérisé en ce que**
lorsqu'il est déterminé que le véhicule (6) se trouve dans le premier mode de conduite, le deuxième élément graphique (8) est représenté mis en valeur,
lorsqu'il est déterminé que le véhicule (6) se trouve dans le deuxième mode de conduite, le premier élément graphique (7) est représenté mis en valeur, et lorsqu'il est déterminé que le véhicule (6) se trouve dans le troisième mode de conduite, le premier (7) et le deuxième élément graphique (8) sont représentés mis en valeur.

9. Procédé selon l'une des revendications 2 à 8, **caractérisé en ce que**
un temps est déterminé, après lequel le véhicule (6) change du mode de conduite déterminé à un autre mode de conduite, la première et/ou la deuxième action étant transférée du premier ou du deuxième acteur à l'autre acteur respectif,
un élément graphique directionnel (12) est généré, lequel pointe du premier (9.1, 9.2) et/ou du deuxième élément d'action (10.1, 10.2) près du premier (7) et/ou du deuxième élément graphique (8) vers l'autre premier (9.1, 9.2) et/ou deuxième élément d'action (10.2) respectif, et
le temps déterminé est affiché près de l'élément graphique directionnel (12).

10. Procédé selon l'une des revendications 4 à 9, **caractérisé en ce que**
dans le troisième mode de conduite, une notification (11) est délivrée, laquelle indique quelle action doit être accomplie par le deuxième acteur.

11. Procédé selon l'une des revendications 4 à 10, **caractérisé en ce que**
avant un changement imminent du deuxième ou du troisième mode de conduite dans le premier mode de conduite, une alerte est émise, laquelle informe le deuxième acteur de l'action qui doit être prise en charge par lui.

12. Système (1) de représentation des modes de conduite d'un véhicule (6), le véhicule (6) pouvant être utilisé dans au moins deux modes de conduite différents, comprenant
une unité de détermination (5) au moyen de laquelle il peut être déterminé si le véhicule (6) est utilisé dans le premier ou dans le deuxième mode de conduite, une première action pouvant être accomplie au moyen d'un deuxième acteur dans le premier mode de conduite et, dans le deuxième mode de conduite, la première action pouvant être accomplie au moyen d'un premier acteur, le premier acteur étant un système partiel servant à la commande automatique du véhicule (6) et/ou le deuxième actionneur étant le conducteur du véhicule (6), et
une surface d'affichage (3) sur laquelle peut être généré un premier élément graphique (7), lequel représente le premier acteur,
**caractérisé en ce que**
un deuxième élément graphique (8) peut être généré sur la surface d'affichage (3), lequel représente le deuxième acteur,
et
le système comporte une unité de commande (4) au moyen de laquelle, sur la surface d'affichage, suivant qu'il ait été déterminé que le véhicule (6) se trouve dans le premier ou dans le deuxième mode de conduite, un premier élément d'action (9, 10) graphique, lequel représente la première action, peut être généré près du premier (7) et/ou du deuxième élément graphique (8).

13. Système (1) selon la revendication 12, **caractérisé en ce que** la surface d'affichage (3) est disposée dans la vitre du pare-brise du véhicule (6).

14. Véhicule (6) comprenant un système (1) selon la revendication 12 ou 13.
